# EUROPEAN PATENT SPECIFICATION

(11) **EP 1 361 505 B1**
(45) Date of publication and mention of the grant of the patent: **26.01.2011**
(21) Application number: 03009747.1
(22) Date of filing: 05.05.2003
(51) Int. Cl.: G06F 3/14, G09G 5/36

(54) **Liquid crystal display device with two screens and driving method of the same**
Flüssigkristall-Anzeige mit zwei Bildschirmen und Steuerverfahren dafür
Dispositif d'affichage à cristaux liquides avec deux panneaux et sa méthode de commande

(30) Priority: 08.05.2002 JP 2002132720
(43) Date of publication of application: 12.11.2003
(73) Proprietor: Hitachi Displays, Ltd., Mobara-shi, Chiba-ken (JP)
(72) Inventor: Takahashi, Hiroyuki, Funabashi-shi, Chiba-ken (JP)
(74) Representative: Beetz & Partner

(56) References cited:
- EP-A- 0 730 258
- EP-A- 0 881 622
- EP-A- 1 271 904
- EP-A2- 0 456 165
- GB-A- 2 358 758
- US-A- 5 867 140
- US-A1- 2001 016 508
- US-B1- 6 191 758

## Description

### BACKGROUND OF THE INVENTION

The present invention relates to a liquid crystal display device, and more particularly to a liquid crystal display device which includes two liquid crystal display panels having different display data quantities and can perform display of images on respective liquid crystal display panels alternatively or simultaneously and a driving method thereof.

The liquid crystal display device has been popularly used as a display device of video information and character information for an information equipment represented by a personal computer, a portable information terminal, a digital camera and a camera built-in type VTR or the like in view of features thereof that the display device is thin and light-weighted and exhibits low power consumption. Recently, along with rapid spreading of miniaturized equipment such as mobile telephones, portable information terminals and the like, demand for low power consumption has been increased steadily.

Particularly, with respect to the mobile telephone or the like, it is expected that the availability and power saving can be achieved by providing a screen which displays simple information such as status information or manipulation information of the equipment apart from a screen for displaying main useful information such as communication information, content information and the like. That is, in a standby state of a mobile telephone having screens on two surfaces of a body such as a folding type portable telephone, by setting only the screen of small size and low power consumption because of a small display data quantity in an operable state and by operating the screen of required display data quantity in transmitting and receiving manipulation of communication information, the low power consumption can be achieved as a whole.

However, to incorporate two liquid crystal display panels which are driven independently from each other in the mobile telephone or the like, an inner volume of a limited housing is in short and, at the same time, a circuit which drives driving circuits provided to respective liquid crystal display panels in response to using states becomes necessary and hence, the circuit constitution becomes complicated and pushes up a cost.

GB 2 358 758 A discloses a folding portable telephone apparatus with two displays. They are connected to a common controller.

EP 1 271 904 A2 discloses a folder type mobile communication terminal and an operating method thereof. The terminal includes a main body having an auxiliary display unit and a main display unit. They are connected to a mobile station modem for controlling the terminal.

### SUMMARY OF THE INVENTION

It is an object of the present invention to provide a liquid crystal display device and a driving method thereof allowing the reduction of the volume of the device and the simplification of the circuit constitution required for two liquid crystal display panels.

This object is accomplished in accordance with the features of the independent claims. Dependent claims are directed on preferred embodiments of the invention.

### BRIEF DESCRIPTION OF THE DRAWINGS

Figure 1 is a plan view for schematically explaining the first embodiment of the liquid crystal display device according to the present invention.
Fig. 2 is a schematic view for explaining an example of mode for supplying scanning signals and video signals (display data) to a main panel and a sub panel shown in Fig. 1.
Figs. 3A to 3C are schematic views for explaining the state of image display in respective display modes of the main panel PNL1 and the sub panel PNL2 in the first embodiment of the present invention.
Figs. 4A to 4C are schematic views for explaining the allocation of a memory region of a built-in memory for respective display modes of a main panel PNL1 and the sub panel PNL2 in Figs. 3A to 3C.
Fig. 5 is a plan view for schematically explaining the constitution of the second embodiment of the liquid crystal display device according to the present invention.
Fig. 6 is a schematic view for explaining an example of mode for supplying scanning signals and video signals (display data) to the main panel and the sub panel in Fig. 5.
Fig. 7 is an explanatory view of a driving method of the liquid crystal display device according to the present invention.
Fig. 8 is a timing chart for explaining a first example of a driving method of a liquid crystal display device having the constitution shown in Fig. 7.
Fig. 9 is a timing chart for explaining a second example of the driving method of the liquid crystal display device according to the present invention.
Fig. 10 is a timing chart for explaining a third example of the driving method of the liquid crystal display device according to the present invention.
Fig. 11 is a developed perspective view for explaining a constitutional example of a liquid crystal display module which uses the liquid crystal display device according to the present invention.
Fig. 12 is a plan view for explaining an example of appearance of the liquid crystal display device according to the present invention.

### DESCRIPTION OF THE PREFERRED EMBODIMENTS

Hereinafter, specific embodiments of the present invention are explained in detail in conjunction with drawing showing the embodiments. In the drawings which are referred to in the explanation, parts which have the identical functions are given same reference symbols and the repeated explanation of these parts are omitted. Here, the explanation is made by taking a twisted nematic type liquid crystal display panel using thin film transistors as active elements as an example.

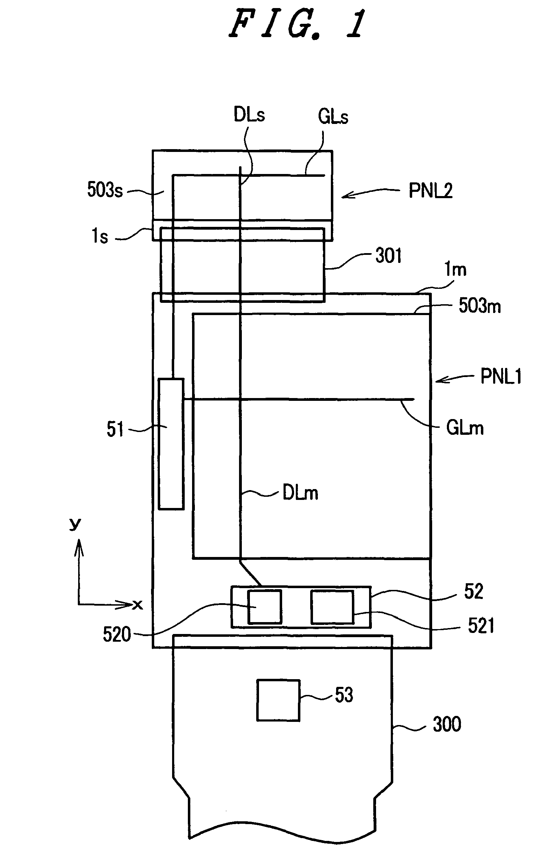

Fig. 1 is a plan view for schematically explaining the constitution of the first embodiment of the liquid crystal display device according to the present invention. In the drawing, reference symbol PNL1 indicates a main panel, wherein a liquid crystal layer is sandwiched between a first substrate 1m and a second substrate 503m. On a main surface of the first substrate 1m, that is, on an inner surface of the first substrate 1m which faces the second substrate 503m in an opposed manner, a large number of gate lines GLmwhich extend in a first direction (horizontal direction, referred to as x direction hereinafter) and are arranged in parallel in a second direction (vertical direction, referred to as y direction hereinafter) are formed. Further, in the main surface of the first substrate 1m, a large number of source lines (drain lines) DLm which are arranged such that they extend in the y direction and are arranged in parallel in the x direction and cross the gate lines GLm are formed. Hereinafter, the explanation is made using the term "source lines DLm".

Reference symbol PNL2 indicates a sub panel, wherein a liquid crystal layer is sandwiched between a first substrate 1s and a second substrate 503s. On a main surface of the first substrate 1s, that is, on an inner surface of the first substrate 1s which faces the second substrate 503s in an opposed manner, a large number of gate lines GLs which extend in the x direction and are arranged in parallel in the y direction are formed. Further, in the main surface of the first substrate 1s, a large number of source lines DLs which are arranged such that they extend in the y direction and are arranged in parallel in the x direction and cross the gate lines GLs are formed. In this embodiment, the main panel PNL1 and the sub panel PNL2 have the same resolution (definition) of display, while a screen size of the sub panel PNL2 is smaller than a screen size of the main panel PNL1.

The number of source lines DLs formed on the sub panel PNL2 is smaller than the number of source lines DLm formed on the main panel PNL1, while the number of gate lines GLs formed on the sub panel PNL2 is smaller than the number of gate lines GLm formed on the main panel PNL1.

On one side (left side in Fig. 1) in the x direction of the first substrate 1m of the main panel PNL1, a gate driver (semiconductor chip) 51 is mounted. The gate driver 51 supplies gate signals (scanning signals) to the gate lines GLm of the main panel PNL1 and the gate lines GLs of the sub panel PNL2. That is, the gate driver 51 has terminals which supply the gate signals to both the gate lines GLm of the main panel PNL1 and the gate lines GLs of the sub panel PNL2.

In the same manner, on one side (lower side in Fig. 1) in the y direction of the first substrate 1m, a source driver (drain driver:semiconductor chip) 52 is mounted. Hereinafter, explanation is made using the term "source driver 52". Some of the source lines DLm of the main panel PNL1 are driven by the source driver 52 mounted on the first substrate 1m of the main panel PNL1 in such a manner that they are communicated with the source lines DLs of the sub panel PNL2.

In the source driver 52, a timing controller (TCON) 520 which generates timing signals and the like for displaying images on the main panel PNL1 and the sub panel PNL2 based on video data and various timing signals including clock signals inputted from an outer signal source (CPU or the like at a body side) by way of a first flexible printed circuit board 300, and a video memory (graphic memory: GRAM) 521 which stores the video data are incorporated. Hereinafter, the explanation is made by naming the video memory as "built-in memory". Here, a power source circuit (semiconductor chip) 53 is mounted on the flexible printed circuit board 300.

The main panel PNL1 and the sub panel PNL2 are connected by way of a second flexible printed circuit board 301 and the scanning signals and video signals (gray scale voltages) from the gate driver 51 and the source driver 52 are supplied to the main panel PNL1 and the sub panel PNL2. Further, on inner surfaces of respective second substrates 503m, 503s of the main panel PNL1 and the sub panel PNL2, color filters of three colors (RGB) and common electrodes are formed. A common electrode voltage (Vcom) is applied to the common electrodes. Here, the color filters and the common electrodes are not shown in the drawing.

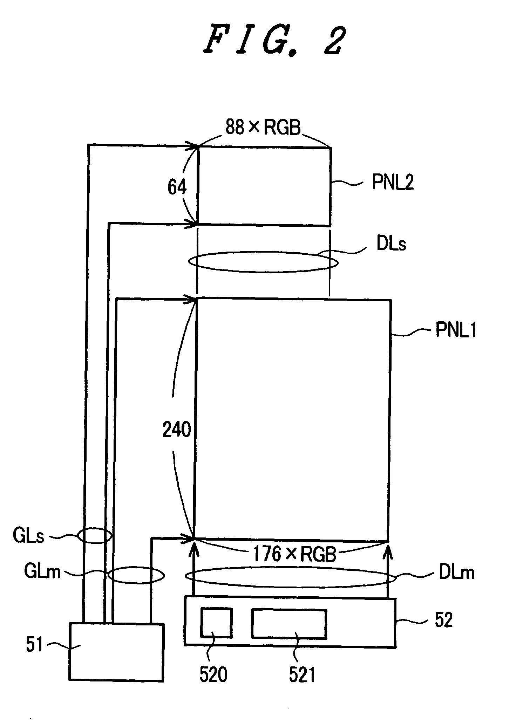

Fig. 2 is a schematic view for explaining an example of a supply mode of scanning signals and video signals (display data) to the main panel and the sub panel in Fig. 1. In this example, the display capacity of the main panel PNL1 is 176 columns × RGB in the x direction and 240 rows in the y direction. Then, the display capacity of the sub panel PNL2 is 88 columns × RGB in the x direction and 64 rows in the y direction.

The built-in memory 521 provided to the source driver 52 has a capacity which corresponds to the display capacity of the main panel PNL1 (176 columns × RGB) × 240 rows). This built-in memory 521 can be allocated to both the main panel PNL1 and the sub panel PNL2. The source driver 52 has the number of terminals corresponding to a display width (176 × RGB = width of arrangement of 528 pieces of source lines) of the main panel PNL1.

Further, the gate driver 51 includes, in addition to the number of terminals which corresponds to a width of arrangement of number of terminals (240 pieces) for scanning the main panel PNL1, the number of terminals which corresponds to a width of arrangement of number (64 pieces) of terminals for scanning the sub panel PNL2. Source lines DLs of the sub panel PNL2 are formed by electrically extending the source lines DLm of the main panel PNL1. As mentioned previously, the source lines DLs of the sub panel PNL2 and the source lines DLm of the main panel PNL1 are connected with each other on the second flexible printed circuit board 301.

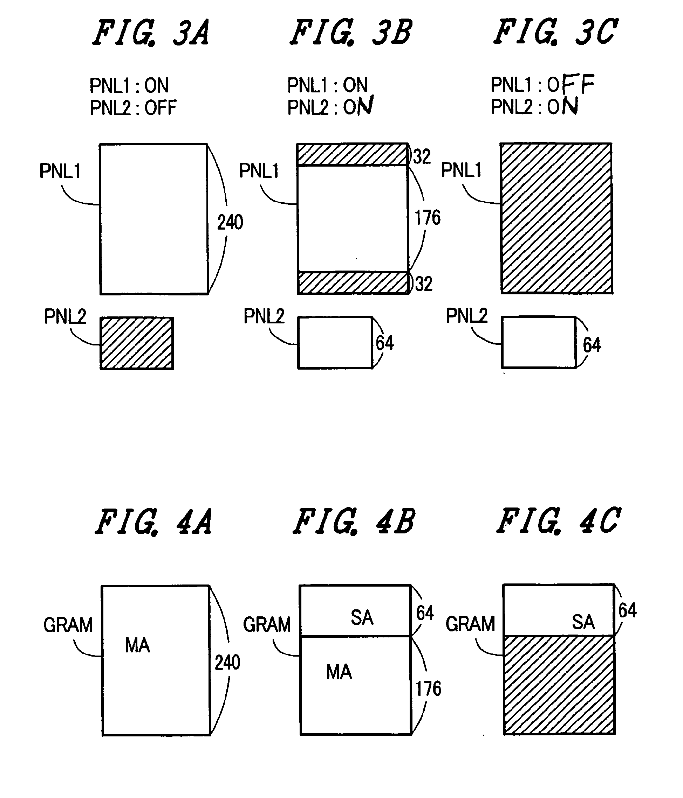

Figs. 3A to 3C are schematic views for explaining the image display state in respective display modes of the main panel PNL1 and the sub panel PNL2 in this embodiment. Figs. 4A to 4C are schematic views for explaining the allocation of memory regions in the built-in memory for respective display modes of the main panel PNL1 and the sub panel PNL2 in Figs. 3A to 3C. The allocation states in the built-in memory shown in Figs. 4A to 4C correspond to respective display mode in Figs. 3A to 3C.

The liquid crystal display device of this embodiment has three display modes. The first display mode is a mode in which a display is performed only on the main panel PNL1 (PNL1 in the ON state) and a display is not performed on the sub panel PNL2 (PNL2 in the OFF state). The second display mode is a mode in which a display is performed on both the main panel PNL1 and the sub panel PNL2 (PNL1, PNL2 in the ON state). The third display mode is a mode in which a display is performed only on the sub panel PNL2 (PNL2 in the ON state) and a display is not performed on the main panel PNL1 (PNL1 in the OFF state) . In Figs. 3A to 3C, whitened portions indicate that the respective panels are in the display state and hatching indicates that the respective panels are in the non-display state. In Figs. 4A to 4C, whitened portions indicate regions which are served for display of the built-in memory 521 (GRAM) and hatching indicates a region which is not served for display.

Fig. 4A shows an allocation state of a display data region of the built-in memory in the first display mode shown in Fig. 3A. In this operation mode, the whole 240 rows of the built-in memory (176 columns × RGB) × 240 rows are served for storing the display data of the main panel PNL1. Further, Fig. 4B shows an allocation state of the built-in memory in the second display mode shown in Fig. 3B. In this operation mode, a region of the built-in memory defined by the row direction (176 columns × RGB) × 176 rows is served for display of the main panel PNL1, and a region of the built-in memory defined by the row direction (176 columns × RGB) × 64 rows is served for display of the sub panel PNL2. Here, with respect to the screen of the main panel PNL1, both ends (176 columns × RGB) × 32 and (176 columns × RGB) × 32 constitute non-display regions and an amount of display corresponding to the non-display regions is allocated to the display of the sub panel PNL2 and hence, the main panel PNL1 performs the image display which is narrowed by an amount corresponding to the display performed on the sub panel PNL2.

The operation of the gate driver 51 in this second display mode scans both the main panel PNL1 and the sub panel PNL2. However, the total number of scanning rows is set to a value below the number of rows which the source driver 52 can handle. Here, since the total number of rows (240 + 64 = 304 rows) is larger than the number of rows (240 rows) which the source driver 52 can handle, at least a portion corresponding to the exceeding amount is not scanned. Non-scanned rows are collectively applied for refreshing during the retracing periods. The built-in memory 521 is served for storing the display data for number of rows (176 rows) for the main panel PML1 and the display data for number of rows (64 rows) for the sub panel PNL2.

Then, Fig. 4C indicates the allocation state of the display data storage region of the built-in memory in the third display mode shown in Fig. 3C. In this operation mode, the region of the display data of the sub panel PNL2 is allocated to the (176 rows × RGB) × 64 rows in the built-in memory. As the operation of the gate driver 51, the sub panel PNL2 side is scanned and the scanning pulses are applied to the main panel PNL1 side during the retracing periods for refreshing. The whole rows (64 rows) of the built-in memory 521 are served for storing the display data of the sub panel PNL2. In performing the display only on the sub panel PNL2, the access region of the built-in memory 521 is small, that is, the number of scanning rows is small and hence, it is possible to reduce the power consumption.

In this manner, with respect to respective display modes shown in Figs. 3A to 3C, in the first display mode which performs the display only on the main panel PNL1, the gate driver 51 performs the usual scanning with respect to the main panel PNL1 and collectively applies the scanning pulses to the sub panel PNL2 during the retracing period thus performing refreshing. The whole built-in memory 521 (here, corresponding to 240 rows) is served for storing the display data in the main panel PNL1. Control signals for driving the gate lines are generated by the timing controller (TCON) 520.

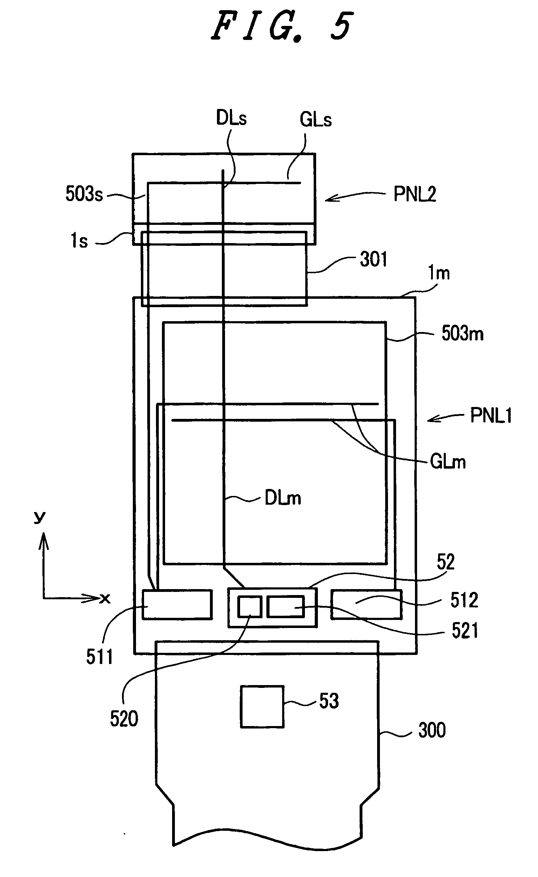

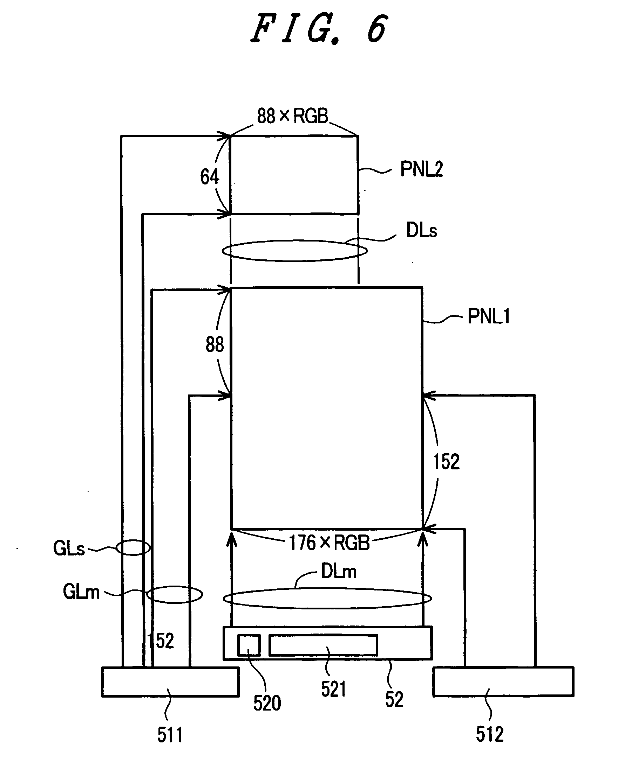

Fig. 5 is a plan view for schematically explaining the constitution of the second embodiment of the liquid crystal display device according to the present invention. Further, Fig. 6 is a schematic view for explaining an example of mode for supplying scanning signals and video signals (display data) to the main panel and the sub panel in Fig. 5. Also in this embodiment, a display capacity of the main panel PNL1 is 176 rows × RGB in the x direction and 240 rows in the y direction. Further, a display capacity of the sub panel PNL2 is 88 rows × RGB in the x direction and 64 rows in the y direction.

In Fig. 5 and Fig. 6, reference symbols equal to those in Fig. 1 correspond to identical functional parts. In this embodiment, a gate driver is divided at both sides (left and right sides in Fig. 5) of the main panel PNL1 and the divided gate drivers are mounted as a first gate driver 511 and a second gate driver 512. Gate lines GLm of the main panel PNL1 are wired from left and right sides of the panel. Although wiring to gate lines GLs of the sub panel PNL2 is pulled out from the first gate driver 511, the wiring may be pulled out from the second gate driver 512. Since other constitutions of this embodiment are substantially equal to those of the first embodiment, the repeated explanation is omitted.

According to this embodiment, it is possible to arrange the gate lines in the periphery of the display screen constituted by the main panel of the liquid crystal display device, that is, so-called picture frame regions in a left-and-right symmetry and, at the same time, a space necessary for wiring has a margin and hence, it is possible to increase a width size of the wiring whereby the tolerance in design including reduction of wiring resistance can be enhanced.

Then, a method for driving the liquid crystal display device of the invention is explained with respect to respective display modes explained in conjunction with Figs. 3A to 3C and Figs. 4A to 4C.

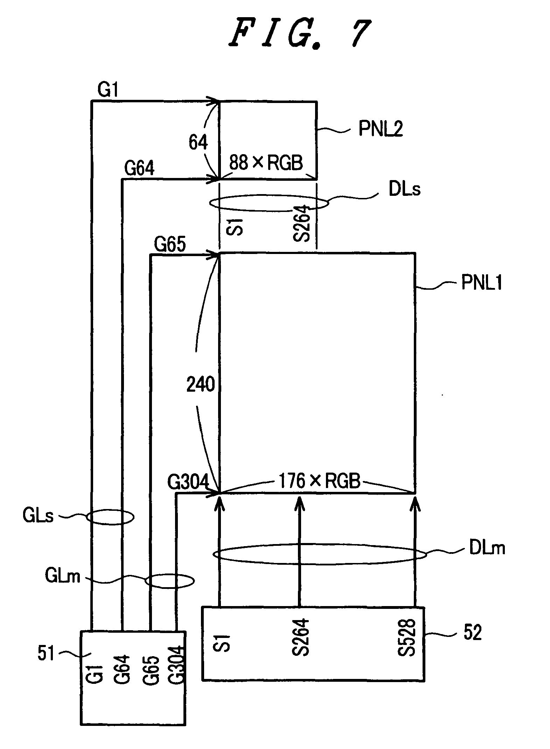

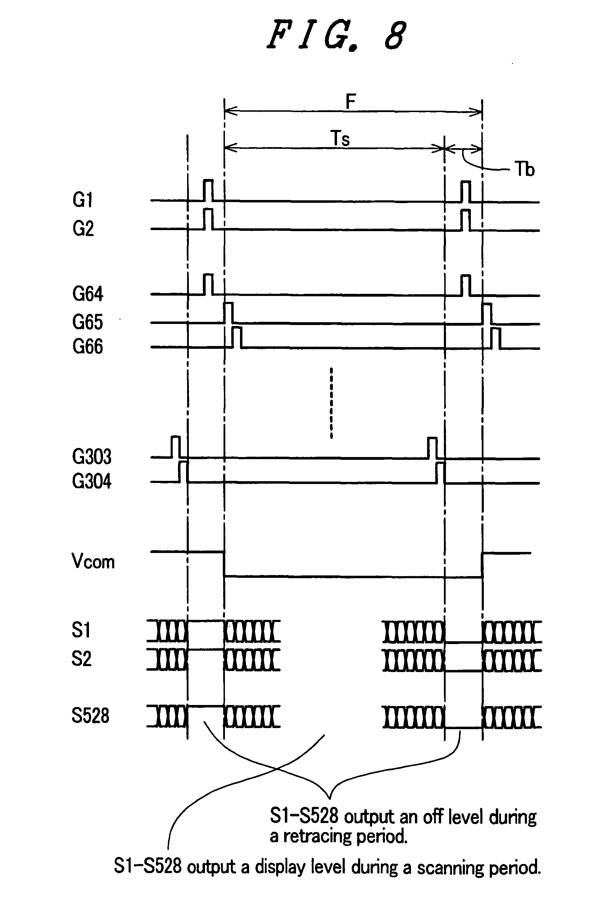

Fig. 7 is an explanatory view of the driving method of the liquid crystal display device according to the invention and is an explanatory view which simplifies the constitution of the first embodiment of the invention shown in Fig. 2 by adding gate line number and the source line number. Further, Fig. 8 is a timing chart for explaining a first example of the driving method of the liquid crystal display device having the constitution shown in Fig. 7. This driving example corresponds to the first display mode which performs the display using only the main panel explained in Fig. 3A and Fig. 4A (PNL1: ON, PNL2: OFF). The operational explanation shown in Fig. 8 is also applicable to the second embodiment explained in conjunction with Fig. 6 by giving numbers similar to those in Fig. 7 to the gate lines distributed at the left and right sides of the main panel PNL1.

In Fig. 7, reference symbol GLs indicates the gate signal lines leading to the gate lines (G1 to G64) of the sub panel PNL2, reference symbol GLm indicates the gate signal lines leading to the gate lines (G65 to G304) of the main panel PNL1, and DLm (S1 to S528) are the source signal lines outputted to the source lines (176 × RGB) of the main panel PNL1 from the source driver 52. A portion (S1 to S264) of the source signal lines DLm is communicated with the source signal lines DLs supplied to the source lines (88 rows × RGB) of the sub panel PNL2. Gate signals are supplied to the gate lines G1 to G64 of the sub panel PNL2 from the gate driver 51. Further, the gate signals are supplied to the gate lines G65 to G304 of the main panel PNL1 from the gate driver 51.

In the timing chart shown in Fig. 8, reference symbols G1 to G304, S1, S2 to S528 correspond to the gate lines and source lines which are given reference symbols equal to those in Fig. 7. Further, reference symbol F indicates a frame period, Ts indicates a scanning period, Tb indicates a retracing period, and Vcom indicates a counter electrode voltage. The operational example of this embodiment is explained also in conjunction with Fig. 3A and Fig. 4A hereinafter.

As shown in Fig. 8, the scanning signals (scanning pulses of High level) are collectively applied to the gate lines G1 to G64 of the sub panel PNL2 which is in the non-display mode during the retracing period Tb so that the scanning is not performed. The scanning signals are sequentially supplied to the gate lines G65 to G304 of the main panel PNL1 which is in the display mode during the scanning period Ts thereof. Here, the voltage Vcom which is applied to the counter electrodes during the scanning period Ts and during the retracing period Tb in which the scanning signals are collectively applied is set at the display level (Low level).

Further, in all retracing periods Tb, an OFF level (non-display level) is applied to the source lines S1 to S528, while in the scanning period Ts, the gray scale signal which constitutes the display level is supplied to the source lines S1 to S528. Due to such an operation, it is possible to perform the display only on the main panel PNL1.

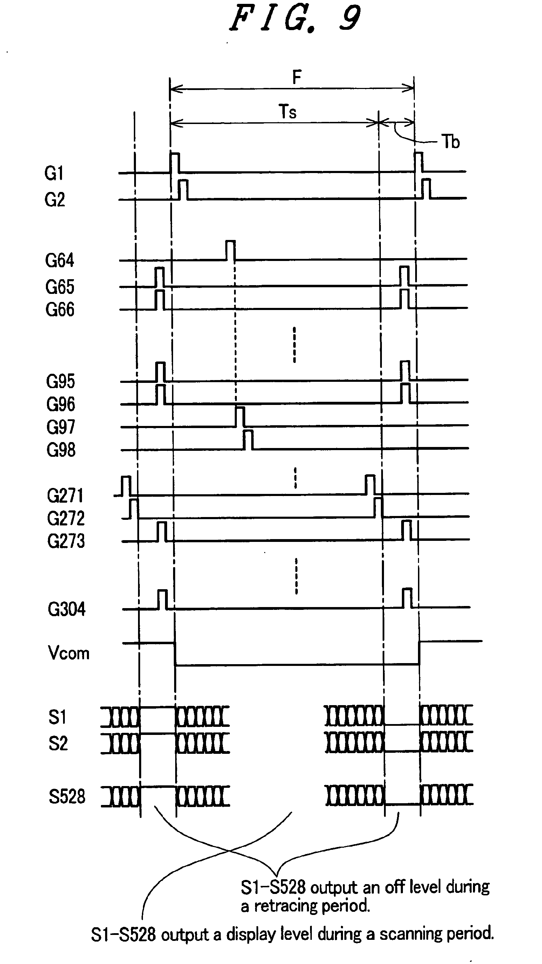

Fig. 9 is a timing chart for explaining a second example of the driving method of the liquid crystal display device according to the invention. This driving example corresponds to the second display mode in which the display is performed on both the main panel and the sub panel explained in conjunction with Fig. 3B and Fig. 4B (PNL1: ON, PNL2: ON). Here, the operational explanation in Fig. 9 is also applicable to the second embodiment explained in conjunction with Fig. 6 by giving numerals similar to those in Fig. 7 to the gate lines distributed at the left and right sides of the main panel PNL1. In Fig. 9, reference symbols equal to those in Fig. 8 show timings of portions having identical functions. Hereinafter, this operational example, that is, the operation of the second display mode shown in Fig. 9 is explained also in conjunction with Fig. 7, Fig. 3B and Fig. 4B.

In Fig. 9, in the sub panel PNL2, the scanning signals are supplied to the gate lines G1 to G64 during the scanning period Ts. On the other hand, the scanning signals (scanning pulses) are collectively applied to the gate lines G65 to G96 and G273 to G304 of the main panel PNL1 during the retracing period Tb so as to set those lines in the non-scanning state. Further, the scanning signals are applied to the gate lines G97 to G272 during the scanning period Ts. On the other hand, as shown in Fig. 4B, the display data for the sub panel PNL2 are stored in a region of the built-in memory (GRAM) 521 corresponding to 64 pieces of scanning lines, while the display data for the main panel PNL1 are stored in a region of the built-in memory 521 corresponding to 176 pieces of scanning lines. Then, an OFF level (non-display level) is supplied to the source lines S1 to S528 during the retracing period Tb and an ON level (display level) is supplied to the source lines S1 to S528 during the scanning period Ts.

Due to such an operation, images of the built-in memory (GRAM) 521 corresponding to 64 pieces of scanning lines are displayed on the whole region of the sub panel PNL2, while images of the built-in memory (GRAM) 521 corresponding to 176 pieces of scanning lines are displayed within a range of the scanning lines 33 to 208 of the main panel PNL1.

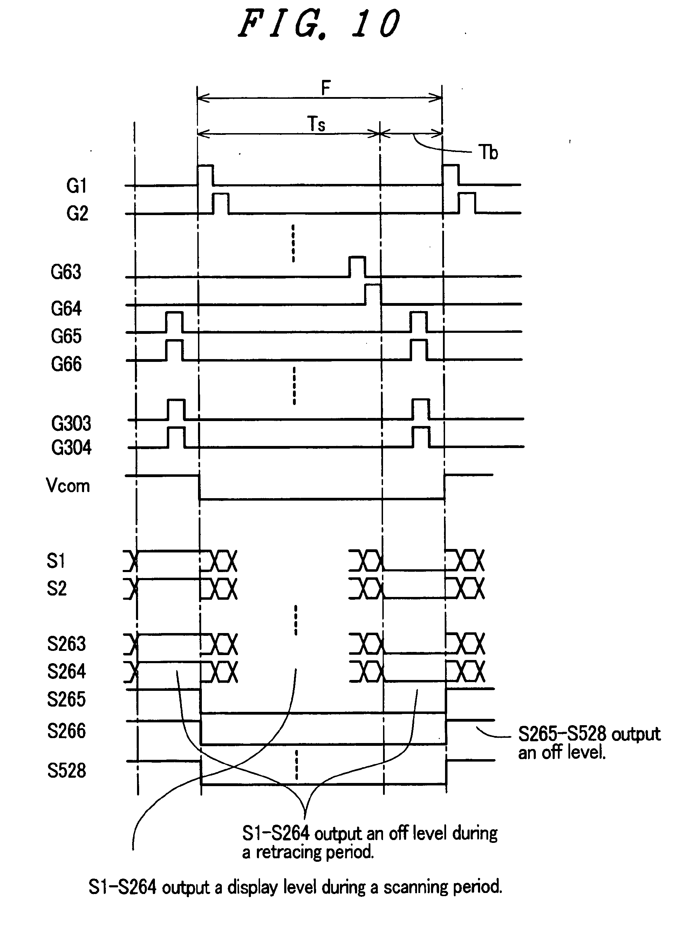

Fig. 10 is a timing chart for explaining the third example of the driving method of the liquid crystal display device according to the present invention. This driving example corresponds to the third display mode in which the display is performed only on the sub panel explained in conjunction with Fig. 3C and Fig. 4C (PNL1: OFF, PNL2: ON). Here, the operational explanation in Fig. 10 is also applicable to the second embodiment explained in conjunction with Fig. 6 by giving numerals similar to those in Fig. 7 to the gate lines distributed at the left and right sides of the main panel PNL1. In Fig. 10, reference symbols equal to those in Fig. 8 show timings of portions having identical functions. Hereinafter, this operational example, that is, the operation of the third display mode shown in Fig. 10 is explained also in conjunction with Fig. 7, Fig. 3C and Fig. 4C.

In Fig. 10, to the gate lines G65 to G304 of the main panel PNL1 in the non-display mode, the scanning signals (scanning pulses of High level) are collectively applied during the tracing period Tb so as to set the main panel PNL1 to the non-scanning state. The scanning signals are sequentially supplied to the gate lines G1 to G64 of the sub panel PNL2 which is in the display mode during the scanning period Ts. Here, the voltage Vcom which is applied to the counter electrodes during the scanning period Ts and during the retracing period Tb in which the scanning signals are collectively applied is set as the display level (Low level).

Further, in all retracing periods Tb, an OFF level (non-display level) is applied to the source lines S1 to S528, while in the scanning period Ts, the gray scale signal which constitutes the display level is supplied to the source lines S1 to S528. Further, an OFF level is supplied to the source lines S265 to 528. Due to such an operation, it is possible to perform the display only on the sub panel PNL2. Accordingly, in this display mode, the power consumption can be suppressed so that the standby or the like for a long time can be realized.

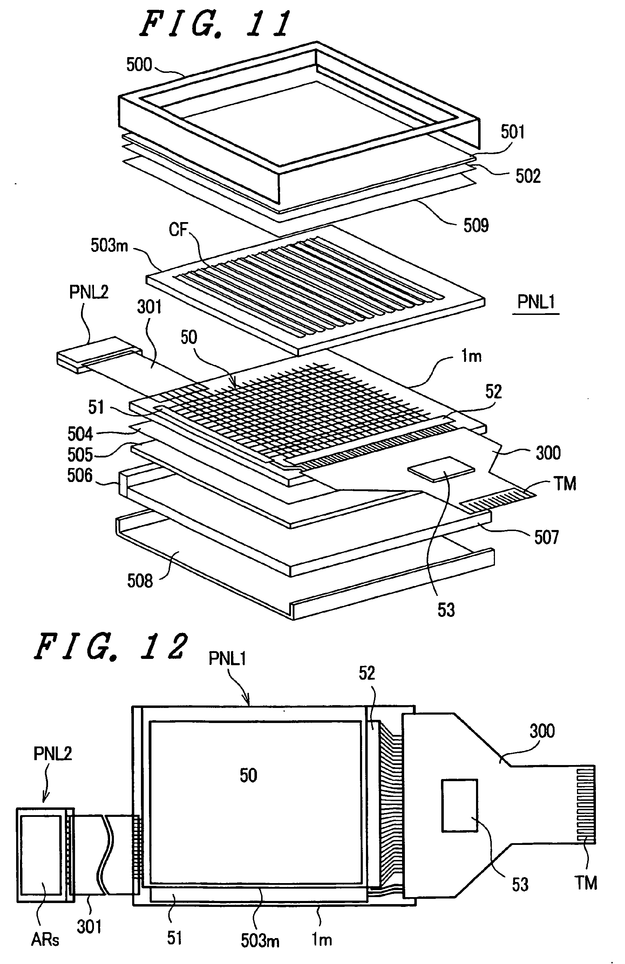

Fig. 11 is a developed perspective view for explaining a constitutional example of a liquid crystal display module used in the liquid crystal display device of the invention. On a first substrate 1 of the main panel PNL1, an active matrix array (display region) 50, the gate driver 51 and the source driver 52 are formed, while on a main surface (inner surface of the second substrate 503, color filters CF and common electrodes (not shown in the drawing) are formed. A liquid crystal layer is sealed between the first substrate 1m and the second substrate 503m. Further, on a back surface of the first substrate 1m, a phase difference film 504 and a polarization film 505 are mounted. Still further, also on an upper surface of the second substrate 503m, a phase difference film 509 and a polarization film 501 are mounted.

The above-mentioned gate driver 51 and source driver 52 are mounted on a periphery of the first substrate 1m, one end of the first flexible printed circuit board 300 on which the power source circuit 53 formed of an integrated circuit chip is mounted is connected to a side of the first substrate 1 on which the source driver 52 is mounted, and the terminal TM at another end is connected to an external signal source not shown in the drawing. A lighting device (backlight) which is constituted of a light emitting diode 506 and a light guide plate 507 is arranged at the back of the main panel PNL1. These constitutional elements are integrally formed with a lower case 508 and an upper case 500 thus constituting the liquid crystal display module. The liquid crystal display module is used as display means of a mobile telephone or a portable information terminal.

The sub panel PNL2 is connected to one side of the main panel PNL1 using the second flexible printed circuit board 301. The structure of the sub panel PNL2 also follows the structure of the main panel PNL1, wherein the numbers of the gate lines and the source lines are set as described previously.

Fig. 12 is a plan view for explaining an example of appearance of the liquid crystal display device according to the invention. In the main panel PNL1, the liquid crystal display panel is formed of the first substrate 1m and the second substrate 503m and the scanning signal line driving circuit 51 and the video signal line driving circuit 52 which are constituted of integrated circuit chips are mounted on the periphery of the active matrix array (display region 50). The power source circuit 53 is mounted on the flexible printed circuit board 300.

The sub panel PNL2 is connected to the main panel PNL1 using the second flexible printed circuit board 301. For example, such a liquid crystal display device can be used such that the main panel PNL1 is used as a main display screen of the mobile telephone and the sub panel PNL2 is used for simple data display such as standby display, time display and the like.

As has been explained heretofore, according to the present invention, it is possible to easily realize the reduction of volume of the equipment and the simplification of the circuit constitution at the time of alternatively or simultaneously using two screens or two liquid crystal display panels, whereby it is possible to provide the liquid crystal display device of low power consumption as a whole.

## Claims

1. A liquid crystal display device comprising:
a first liquid crystal display panel (PNL1) of active matrix type having a first number of rows, each row comprising a main scanning signal (GLm) line, and a second number of columns, each column comprising a main video signal line (DLs) which cross the first number of main scanning signal lines;
a second liquid crystal display panel (PNL2) of active matrix type having a third number of rows, each row comprising a sub scanning signal line (GLs), and a fourth number of columns, each column comprising sub video signal line (DLs) which cross the third number of sub scanning signal lines;
a scanning signal line driving circuit (51) which supplies scanning signals to the main scanning signal lines and the sub scanning signal lines; and
a video signal line driving circuit (52) which supplies video signals to the main video signal lines and the sub video signal lines,
**characterized in that**
the sub video signal lines (DLs) of the second liquid crystal display panel (PNL2) are electrically connected to the main video signal lines (DLm) of the first liquid crystal display panel (PNL1), and
the scanning signal line driving circuit (51) and the video signal line driving circuit (52), in performing a display on both the first liquid crystal display panel (PNL1) and the second liquid crystal display panel (PNL2) simultaneously, performs in a display mode on at least some of the first and/or third numbers of rows and performs in a non-display mode on the remaining rows.

2. A liquid crystal display device according to claim 1, **characterized in that** the liquid crystal display device includes an image memory (521) which stores display data for a plurality of rows and a capacity of the image memory is smaller than a sum of a capacity of display data for performing in a display mode for the whole first liquid crystal display panel and the whole second liquid crystal display panel.

3. A driving method of a liquid crystal display device comprising:
a first liquid crystal display panel of active matrix type having a first number of rows, each row comprising a main scanning signal line, and a second number of columns, each column comprising a main video signal line which cross the first number of main scanning signal lines;
a second liquid crystal display panel of active matrix type having a third number of rows, each row comprising a sub scanning signal line, and a fourth number of columns, each column comprising a sub video signal line, which cross the third number of sub scanning signal lines and;
a scanning signal line driving circuit which supplies scanning signals to the main scanning signal lines and the sub scanning signal lines; and
a video signal line driving circuit which supplies video signals to the main video signal lines and the sub video signal lines,
**characterized in that**
the sub scanning signal lines of the second liquid crystal displaypanel are electrically connected to the main video signal lines of the first liquid crystal display panel, and
the scanning signal line driving circuit and the video signal line driving circuit, in performing a display on both the first liquid crystal display panel and the second liquid crystal display panel simultaneously perform in a display mode on at least some of the first and/or third numbers of rows and performs in a non-display mode on the remaining rows.

4. A driving method of a liquid crystal display device according to claim 3, **characterized in that** the liquid crystal display device includes an image memory which stores display data for a plurality of rows and a capacity of the image memory is smaller than a sum of a capacity of display data for performing in the display mode for the whole first liquid crystal display panel and the whole second liquid crystal display panel.

## Patentansprüche

1. Flüssigkristall-Anzeigevorrichtung mit:
einem ersten Flüssigkristall-Anzeigefeld (PNL1) eines aktiven Matrixtyps, das eine erste Anzahl von Reihen aufweist, wobei jede Reihe eine Hauptabtastsignal- (GLm)-Leitung umfasst, und eine zweite Anzahl von Säulen aufweist, wobei jede Säule eine Hauptvideosignalleitung (DLs) umfasst, die die erste Hauptabtastsignalleitungsanzahl kreuzen;
einem zweiten Flüssigkristall-Anzeigefeld (PLN2) eines aktiven Matrixtyps, das eine dritte Anzahl von Reihen aufweist, wobei jede Reihe eine Nebenabtastsignalleitung (GLs) umfasst, und eine vierte Anzahl von Säulen aufweist, wobei jede Säule eine Nebenvideosignalleitung (DLs) umfasst, die die dritte Nebenabtastsignalleitungsanzahl kreuzen;
einer Abtastsignalleitungs-Treiberschaltung (51), die den Hauptabtastsignalleitungen und den Nebenabtastsignalleitungen Abtastsignale zuführt; und
einer Videosignalleitungs-Treiberschaltung (52), die den Hauptvideosignalleitungen und den Nebenvideosignalleitungen Videosignale zuführt,
**dadurch gekennzeichnet, dass**
die Nebenvideosignalleitungen (DLs) des zweiten Flüssigkristall-Anzeigefelds (PNL2) mit den Hauptvideosignalleitungen (DLm) des ersten Flüssigkristall-Anzeigefelds (PNL1) elektrisch verbunden sind, und
die Abtastsignalleitungs-Treiberschaltung (51) und die Videosignalleitungs-Treiberschaltung (52) beim Durchführen einer Anzeige auf sowohl dem ersten Flüssigkristall-Anzeigefeld (PNL1) als auch dem zweiten Flüssigkristall-Anzeigefeld (PNL2) gleichzeitig in einem Anzeigemodus auf zumindest einigen der ersten und/oder dritten Anzahl von Reihen arbeiten und auf den übrigen Reihen in einem Nicht-Anzeigemodus arbeiten.

2. Flüssigkristall-Anzeigevorrichtung nach Anspruch 1, **dadurch gekennzeichnet, dass** die Flüssigkristall-Anzeigevorrichtung einen Bildspeicher (521) einschließt, der Anzeigedaten für mehrere Reihen speichert, und die Kapazität des Bildspeichers kleiner als die Summe einer Kapazität von Anzeigedaten zum Arbeiten in einem Anzeigemodus für das gesamte erste Flüssigkristall-Anzeigefeld und das gesamte zweite Flüssigkristall-Anzeigefeld ist.

3. Verfahren zum Ansteuern einer Flüssigkristall-Anzeigevorrichtung, mit:
einem ersten Flüssigkristall-Anzeigefeld eines aktiven Matrixtyps, das eine erste Anzahl von Reihen aufweist, wobei jede Reihe eine Hauptabtastsignalleitung umfasst, und eine zweite Anzahl von Säulen aufweist, wobei jede Säule eine Hauptvideosignalleitung umfasst, die die erste Anzahl von Hauptabtastsignalleitungen kreuzen;
einem zweiten Flüssigkristall-Anzeigefeld eines aktiven Matrixtyps, das eine dritte Anzahl von Reihen aufweist, wobei jede Reihe eine Nebenabtastsignalleitung umfasst, und eine vierte Anzahl von Säulen aufweist, wobei jede Säule eine Nebenvideosignalleitung umfasst, die die dritte Anzahl von Nebenabtastsignalleitungen kreuzen, und;
einer Abtastsignalleitungs-Treiberschaltung, die den Hauptabtastsignalleitungen und den Nebenabtastsignalleitungen Abtastsignale zuführt; und
einer Videosignalleitungs-Treiberschaltung, die den Hauptvideosignalleitungen und den Nebenvideosignalleitungen Videosignale zuführt,
**dadurch gekennzeichnet, dass**
die Nebenabtastsignalleitungen des zweiten Flüssigkristall-Anzeigefelds mit den Hauptvideosignalleitungen des ersten Flüssigkristall-Anzeigefelds elektrisch verbunden sind, und
die Abtastsignalleitungs-Treiberschaltung und die Videosignalleitungs-Treiberschaltung beim Durchführen einer Anzeige auf sowohl dem ersten Flüssigkristall-Anzeigefeld als auch dem zweiten Flüssigkristall-Anzeigefeld gleichzeitig in einem Anzeigemodus auf zumindest einigen der ersten und/oder dritten Anzahl von Reihen arbeiten und auf den übrigen Reihen in einem Nicht-Anzeigemodus arbeiten.

4. Verfahren zum Ansteuern einer Flüssigkristall-Anzeigevorrichtung nach Anspruch 3, **dadurch gekennzeichnet, dass** die Flüssigkristall-Anzeigevorrichtung einen Bildspeicher einschließt, der Anzeigedaten für mehrere Reihen speichert, und die Kapazität des Bildspeichers kleiner als die Summe einer Kapazität von Anzeigedaten zum Arbeiten in dem Anzeigemodus für das gesamte erste Flüssigkristall-Anzeigefeld und das gesamte zweite Flüssigkristall-Anzeigefeld ist.

## Revendications

1. Dispositif d'affichage à cristaux liquides comprenant :
un premier panneau d'affichage à cristaux liquides (PNL1) de type à matrice active possédant un premier nombre de rangées, chaque rangée comprenant une ligne principale de signaux de balayage (GLm), et un deuxième nombre de colonnes, chaque colonne comprenant une ligne principale de signaux vidéo (DLs) qui croise le premier nombre de lignes principales de signaux de balayage ;
un second panneau d'affichage à cristaux liquides (PNL2) de type à matrice active possédant un troisième nombre de rangées, chaque rangée comprenant une ligne secondaire de signaux de balayage (GLs), et un quatrième nombre de colonnes, chaque colonne comprenant une ligne secondaire de signaux vidéo (DLs) qui croise le troisième nombre de lignes secondaires de signaux de balayage ;
un circuit de commande de lignes de signaux de balayage (51) qui fournit des signaux de balayage aux lignes principales de signaux de balayage et aux lignes secondaires de signaux de balayage ; et
un circuit de commande de lignes de signaux vidéo (52) qui fournit des signaux vidéo aux lignes principales de signaux vidéo et aux lignes secondaires de signaux vidéo,
**caractérisé en ce que**
les lignes secondaires de signaux vidéo (DLs) du second panneau d'affichage à cristaux liquides (PNL2) sont électriquement reliées aux lignes principales de signaux vidéo (DLm) du premier panneau d'affichage à cristaux liquides (PNL1), et
le circuit de commande de lignes de signaux de balayage (51) et le circuit de commande de lignes de signaux vidéo (52), en effectuant simultanément un affichage sur le premier panneau d'affichage à cristaux liquides (PNL1) et sur le second panneau d'affichage à cristaux liquides (PNL2), fonctionnent en mode d'affichage sur au moins certaines rangées des premier et/ou troisième nombres de rangées et fonctionnent en mode de non-affichage sur les rangées restantes.

2. Dispositif d'affichage à cristaux liquides selon la revendication 1, **caractérisé en ce que** le dispositif d'affichage à cristaux liquides inclut une mémoire d'images (521) qui stocke des données d'affichage pour une pluralité de rangées et une capacité de la mémoire d'images est inférieure à la somme d'une capacité de données d'affichage pour fonctionner en mode d'affichage pour l'ensemble du premier panneau d'affichage à cristaux liquides et pour l'ensemble du second panneau d'affichage à cristaux liquides.

3. Méthode de commande d'un dispositif d'affichage à cristaux liquides comprenant :
un premier panneau d'affichage à cristaux liquides de type à matrice active possédant un premier nombre de rangées, chaque rangée comprenant une ligne principale de signaux de balayage, et un deuxième nombre de colonnes, chaque colonne comprenant une ligne principale de signaux vidéo qui croise le premier nombre de lignes principales de signaux de balayage ;
un second panneau d'affichage à cristaux liquides de type à matrice active possédant un troisième nombre de rangées, chaque rangée comprenant une ligne secondaire de signaux de balayage, et un quatrième nombre de colonnes, chaque colonne comprenant une ligne secondaire de signaux vidéo qui croise le troisième nombre de lignes secondaires de signaux de balayage et;
un circuit de commande de lignes de signaux de balayage qui fournit des signaux de balayage aux lignes principales de signaux de balayage et aux lignes secondaires de signaux de balayage ; et
un circuit de commande de lignes de signaux vidéo qui fournit des signaux vidéo aux lignes principales de signaux vidéo et aux lignes secondaires de signaux vidéo,
**caractérisé en ce que**
les lignes secondaires de signaux de balayage du second panneau d'affichage à cristaux liquides sont électriquement reliées aux lignes principales de signaux vidéo du premier panneau d'affichage à cristaux liquides, et
le circuit de commande de lignes de signaux de balayage et le circuit de commande de lignes de signaux vidéo, en effectuant un affichage simultanément sur le premier panneau d'affichage à cristaux liquides et sur le second panneau d'affichage à cristaux liquides, fonctionne en mode d'affichage sur au moins certaines rangées des premier et/ou troisième nombres de rangées et fonctionne en mode de non-affichage sur les rangées restantes.

4. Méthode de commande d'un dispositif d'affichage à cristaux liquides selon la revendication 3, **caractérisé en ce que** le dispositif d'affichage à cristaux liquides inclut une mémoire d'images qui stocke des données d'affichage pour une pluralité de rangées et une capacité de la mémoire d'images est inférieure à la somme d'une capacité de données d'affichage pour fonctionner en mode d'affichage pour l'ensemble du premier panneau d'affichage à cristaux liquides et pour l'ensemble du second panneau d'affichage à cristaux liquides.
